# EUROPEAN PATENT SPECIFICATION

(11) **EP 2 532 570 B1**
(45) Date of publication and mention of the grant of the patent: **22.11.2017**
(21) Application number: 12183343.8
(22) Date of filing: 14.04.2006
(51) Int. Cl.: B62D 5/06, B62B 5/06, B62D 51/04, B62D 55/00, B62B 3/06, B62D 51/00, B62D 53/04, B66F 9/20

(54) **STEER CONTROL SYSTEM FOR AN INDUSTRIAL VEHICLE**
LENKSTEUERSYSTEM FÜR EIN INDUSTRIEFAHRZEUG
SYSTEME DE COMMANDE DE DIRECTION POUR VEHICULE INDUSTRIEL

(30) Priority: 19.04.2005 US 109900; 19.04.2005 US 110095; 10.03.2006 US 372638
(43) Date of publication of application: 12.12.2012
(62) Divisional of application: 06750286.4
(73) Proprietor: NACCO Materials Handling Group, Inc., Fairview, OR 97024 (US)
(72) Inventor: Rose, Timothy, Winterville, NC North Carolina 28590 (US); Hoffman, Matthew K., Greenville, NC North Carolina 27858 (US)
(74) Representative: J A Kemp

(56) References cited:
- EP-A1- 0 900 719
- WO-A1-2004/059088
- US-A1- 2005 016 779

## Description

### BACKGROUND

An industrial pallet truck is utilized to lift and transport loads between locations. The operator of the pallet truck may be required to move loads repeatedly on and off of the pallet truck within a very short period of time, and is often required to move specific inventory from various locations in what is termed "picking." During this practice, it is desirable that the operator can leave the pallet truck and pick a load while the pallet truck continues to move in the direction of the next load. To avoid inadvertent vehicle travel, pallet trucks have a dead-man mechanism that engage a vehicle brake in the event that the operator leaves the pallet truck and releases the control arm. It is not always practical for the operator to continue to hold the control arm in a non-braking position when leaving the pallet truck and moving to the next pick location. The coast control system is able to retard, or override, the dead-man brake mechanism, allowing the pallet truck to coast. The coast control system typically holds the control arm in a fixed or variable position between vertical and horizontal, such that the vehicle brake does not become engaged, and the pallet truck is allowed to coast to a stop in a controlled manner.

Conventional coast control systems known require an actuation mechanism on the pallet truck that places the pallet truck in a low speed travel mode, and activates the coast control device that overrides the dead-man brake. After the coast control system is activated, the operator is able to actuate the traction motor by means of a pick button or throttle, which powers the pallet truck in a low travel speed mode. Such systems are inefficient, in that they require activation of multiple controls in order to actuate the traction motor within the low speed travel mode, or require multiple activations of the same control to accomplish this task. Some existing coast control systems provide for a coast control button on the control arm handle that must be pressed to activate the coast control system, and a separate pick button, or "jog switch", that must be pressed to actuate the traction motor after the coast control system has been activated.

Another convential system provides for a coast control button on the control arm control head that first functions as means of selecting the low speed travel mode and activating the coast control system, and then must be pressed subsequently to actuate the traction motor. While both of these systems control the mode of travel and operation of the coast control system, they are not efficient or intuitive.

A further problem associated with designs known in the art includes mechanisms which are subject to accelerated breakdown and wear due to environmental conditions. Some designs provide for exposed mechanisms which after a period of time may not function correctly in certain environments. These environments may include locations having low temperatures, high humidity or where the air contains high particulate counts. Other designs include complex or hard to access mechanisms which may be difficult to replace or repair.

Conventional pallet truck steering systems and direction/speed control systems regulate the acceleration, deceleration, braking, and travel speeds of the motorized vehicle as a function of the vertical position of the control arm. The steer systems utilize an on/off switch to detect the steering tongue position either in the brake "on" or "off" positions, where an approximate vertical position and approximate horizontal position of the control arm are considered the braking positions, or brake "on" position. Control arm positions intermediate the approximate vertical and approximate horizontal positions are considered the non-braking position, or brake "off" position, and allow for vehicle acceleration.

Some pallet truck steering systems provide that as the control arm approaches the vertical and horizontal positions, the level of performance of the traction system is reduced to a lower value so as to avoid abrupt changes in travel speed. When the control arm is in a near vertical position that the operator is likely maneuvering the pallet truck in a narrow confine, and requires more sensitive control for steering and acceleration. By causing a reduction in the overall level of performance of the traction system, the operator is able to control the speed and steering of the truck in finer increments while using the same throttle control as at normal travel speeds. A dead-man switch such as those known in the the art, disables the traction system when the control arm is moved to either the vertical or horizontal position.

With the control arm moved from the vertical position, the pallet truck is able to move in a forward or reverse direction according to the direction control sent by the throttle. However, as the control arm is turned towards the left or right steering positions, lateral stability of the pallet truck becomes increasingly compromised the further the control arm is turned towards the extreme left and right steering positions. At the extreme left and right positions, the control arm is positioned nearly perpendicular to the centerline axis of the pallet truck that lies parallel with the forks, and therefore provides the smallest turning radius possible. In this condition, the pallet truck is least stable from a lateral perspective, and sudden, rapid increases to the output of the traction system can cause the pallet truck to pivot onto the side of the frame, and potential damage the pallet truck, the floor, or the load. Inappropriate levels of acceleration might be the result of improper techniques from less experience operators, or for maneuvers involving large loads.

Typical pallet trucks utilize a control arm that is manually operated, however this can result in a manual effort by the operator of as much as 100 lb of force to turn the control arm when a heavy load is being transported, contributing to unwanted operator fatigue. Power assisted steering systems used in some industrial vehicles attempt to overcome this problem by detecting a threshold torque applied by the operator on the steer device, and then provide assisted power steering by means of an auxiliary steer motor or hydraulic device. These systems do not accommodate operating preferences and applications that may be required during operation of the pallet truck.

US 6 227 320 B1 discloses a follower industrial truck including a drive motor, a handle lever having a first end which is linked to a steering shaft of the industrial truck to pivot about a horizontal axis, a handle lever head which is movably mounted with respect to the handle lever in a pull and push manner, a spring arrangement between the handle lever and the head, which biases the head in opposite directions towards a neutral position produces a path signal (Sist), the magnitude of the path signal (Sist) being approximately proportional to the extent of the deflection, a first controller which produces a first nomimal value (Isoll) for the current of the drive motor, and a further controller adapted to receive a comparison current value which is achieved by the comparison of the actual current value (list) of the drive motor and of the first nomimal value (Isoll); from the first controller in order to produce a setting current value for the drive motor.

WO 2004/059088 A1 discloses a self-propelled vehicle, in particular a road-building machine comprises a traction drive, a steering device and a rotatable driver seat in which a traction drive control unit is arranged. Adjustment signals for the traction drive and the steering device are generated according to the direction of the adjustment of the control elements of said control unit. The road-building machine also comprises a device for detecting the rotation angle mu of the instant rotating position of the seat and for correcting the directional components of the adjustment signals of the control elements to a mu angle in such a way that the direction of the adjustment thereof corresponds to the direction of the vehicle motion at each rotating position of the seat.

US 2005/016779 A1 discloses a motorized pallet truck including an angular indicator on the steering arm mechanism providing an internal controller with an angular position of the steering arm or tiller. The controller applies a brake when the tiller is in either of a substantially vertical or substantially horizontal position, limits the speed of the truck for a predetermined rotational movement from the vertical position, and allows full speed of the vehicle when the tiller arm is pulled into a predefined fast driving arc.

### SUMMARY OF THE INVENTION

According to a first aspect of the present invention there is provided the power assist steering system control method of claim 1.

According to a second aspect of the present invention there is provided the pallet truck control system of claim 8.

Additional aspects of the method and system are set out in the respective dependent claims.

Features and advantages of these invention will become more readily apparent from the following detailed description of a preferred embodiment of the invention which proceeds with reference to the accompanying drawings.

### BRIEF DESCRIPTION OF THE DRAWINGS

FIG. 1 is a perspective view of a typical pallet truck in which a novel control system may be made operable;
FIG. 2 is a perspective view of the steer control system;
FIG. 3 is a perspective view of the control panel located on the support bar;
FIG. 4A is a perspective view of a control arm and a coast control system of the pallet truck;
FIG. 4B is a top view of the control arm and coast control system shown in FIG. 4A;
FIG. 4C is a cross sectional view of the control arm and the coast control system identified as section D-D in FIG. 4B;
FIG. 4D is an enlarged cross sectional view of the coast control system shown in FIG. 4C;
FIG. 4E is a cross sectional view of the coast control system identified as section E-E in FIG. 4D;
FIG. 4F is a perspective view of an alternate embodiment of a coast control system and control arm locking mechanism;
FIG. 5 is a schematic diagram depicting the hydraulic functionality of one embodiment of the coast control system;
FIG. 6 is a side view of the control arm mounted to a pallet truck shown in partial view, depicting multiple ranges of motion;
FIG. 7 is a schematic diagram representing the coast control system and a motor controller;
FIG. 8 is a flow diagram showing the logical flow of the pick state of the motorized vehicle;
FIG. 9 is a perspective view of an alternate embodiment of a coast control system, with a coast control button located on the operator platform;
FIG. 10 is a is a perspective view of a steering control unit;
FIG. 11 is a top view of the control arm, depicting multiple ranges of horizontal motion;
FIG. 12 is a data map depicting the pallet truck acceleration, deceleration, braking, and travel speed as a function of control arm angle in the horizontal and vertical axes;
FIG. 13 is a data map depicting ranges of torque assistance for power steering as a function of control arm angle in the horizontal and vertical axes; and
FIG. 14 is a state diagram of the on-board processor and method of determining vehicle acceleration, deceleration, braking, travel speed, and steering control.

### DETAILED DESCRIPTION

A detailed description of the invention is now provided, making reference to the accompanying figures.

Industrial vehicle control systems including coast control systems and power assisted steering systems are described in U.S. Patent Applications 11/109,900 and 11/110,095, both of which were filed on April 19, 2005 and assigned to NMHG Oregon, LLC. In addition, the U.S. Patent Application entitled "Coast Control For Motorized Pallet Truck" filed on March 10, 2006 as a Continuation Application of U.S. Patent Applications 11/109,900 and 11/110,095 is also of potential relevance.

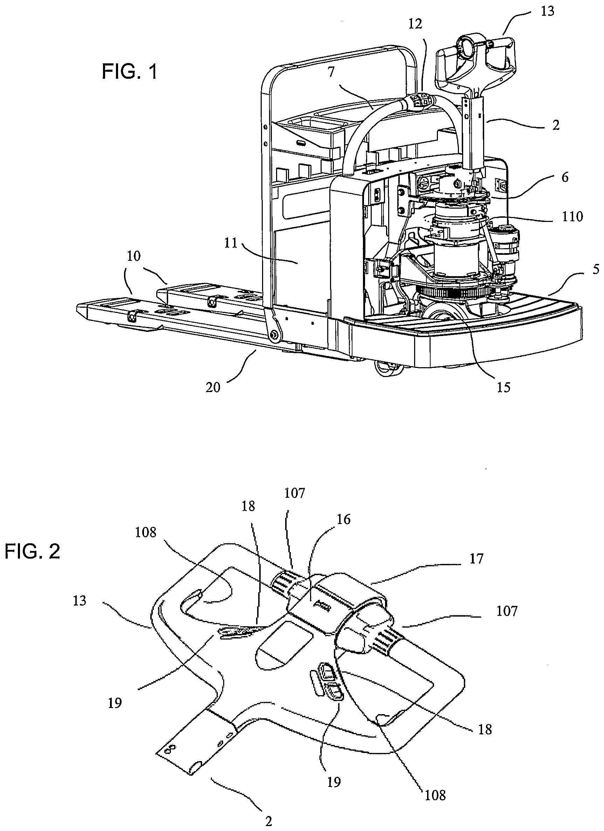

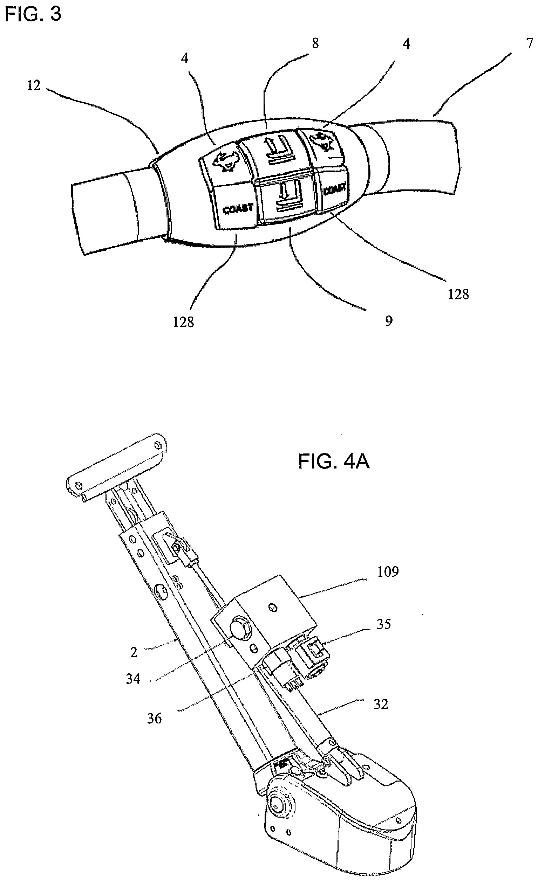

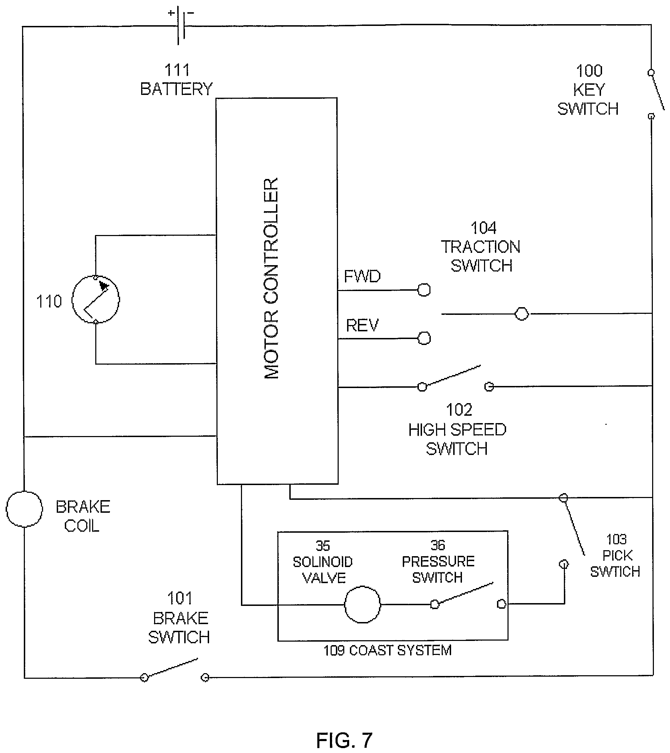

Fig. 1 shows a typical pallet truck 20 which may be used with a novel control system. The pallet truck 20 includes an operator platform 5, by which the operator (not shown) may stand on the pallet truck 20. From the operator platform 5, the operator is able to reach the support bar 7 and steer control handle 13. The support bar 7 has at its center point a control panel 12, which is shown in more detail in Fig. 3. The pallet truck 20 may be powered by a traction motor 110 which is energized by a battery 111 (Fig. 7) located in the battery compartment 11. The steer control handle 13, which is shown in greater detail in Fig. 2 includes a horn button 16, an emergency reverse button 17, two lift buttons 18, and two lower buttons 19. The lift buttons 18 and lower buttons 19 lift and lower, respectively, the forks 11 upon which a load is placed. Two sets of lift buttons 18 and lower buttons 19 are provided to facilitate operation by either a left or right handed operator. The emergency reverse button 17 reverses the direction of the traction motor 110. The steer control handle 13 is attached by means of a steer control arm 2 to a steer control unit 6 which controls the direction of a drive wheel 15, which is located directly under the traction motor 110, and controls the direction of travel of the pallet truck 20.

Pick buttons 108 are provided on either side of the steer control handle 13, which may be used to activate a pick state of a coast control system 109 (Fig. 7). The pick button 108 may be pressed to actuate the traction motor 110 within a low speed travel mode, while the pallet truck 20 remains in the pick state. In one embodiment, the coast control system 109 and the traction motor 110 are both engaged at the first instance of pressing one of the pick buttons, in order to most efficiently initiate the picking process. The pallet truck 20 may operate in a low speed travel mode until the operator takes definite action to activate a high speed travel mode, or a vehicle brake switch 101 (Fig. 7) is activated. In one embodiment, the pick button 108 is disabled in the high speed travel mode, such that the pallet truck 20 may only be operated in the pick state while the pallet truck 20 is in the low speed travel mode.

The steer control handle 13 has two symmetrically located pick buttons 108 and two symmetrically located variable throttles 107. When the operator is on the operator platform 5 or is walking alongside of the pallet truck 20, the operator may advantageously activate one of the pick buttons 108 or throttles 107 with the same hand that is holding and controlling the steer control handle 13. The pallet truck 20 may be accelerated by means of a traction motor 110 that may be operated in either the low speed travel mode or the high speed travel mode. In either low speed or high speed travel modes, the traction motor 110 may be actuated by means of one of the throttles 107. The rate of acceleration and maximum travel speeds obtained in the low and high speed travel modes are determined according to the current limiting characteristics of the low and high speed travel circuits, respectively. For example, the low speed travel mode provides for a maximum travel speed of approximately 3.5 miles per hour. Activation of the throttle 107 causes the traction motor 110 to move in the forward or reverse direction in the low speed travel mode depending on the command sent by the throttle 107 to the traction motor 110.

In the pallet truck 20 shown in Fig. 1 and Fig. 2, the throttle 107 is a butterfly type design which may be rotated forward, away from the operator, to cause the pallet truck 20 to move in the reverse direction, or may be rotated backward, towards the operator, to cause the pallet truck 20 to move in the forward direction, similar to a conventional motorcycle throttle. Other types of throttle 107 may be used, such as twist grips, buttons, toggles, and pedals, without affecting functionality. Similarly, different positions or more instances of the pick button 108 are contemplated and claimed herein.

With the throttle 107 positioned in the forward or reverse direction, the operator may simultaneously or sequentially press either of the two symmetrically located high speed buttons 4, located on the control panel 12 (Fig. 3). The operator may then continue to activate the throttle 107 in the high speed mode, whereby the pallet truck 20 is able to travel at a higher maximum speed, for example when the operator desires to move a greater distance between picking loads. If the throttle 107 is released or placed in a neutral position, the pallet truck 20 coasts to a stop, or is caused to brake depending on the position of the steer control arm 2. In one embodiment, subsequent activation of the throttle 107 causes the pallet truck 20 to travel in the low speed mode until and unless the high speed button 4 is again activated.

The control panel 12 shown in Fig. 3 may be equipped with two symmetrically located auxiliary pick buttons 128, an auxiliary lift button 8 and an auxiliary lower button 9, which function to lift and lower, respectively, the forks 10. Auxiliary pick buttons 128, auxiliary lift button 8, and auxiliary lower button 9, function the same as pick buttons 108, lift buttons 18, and lower buttons 19, respectively. Where this written description references any of the buttons located on the steer control handle 13, the associated auxiliary button on the control panel 12 is assumed to provide the same functionality and achieve the same result as if it had instead been pressed by the operator.

An alternate embodiment provides for the auxiliary pick buttons 128 functioning purely to activate the coast control system 109, and not actuate the traction motor 110 on the initial or any subsequent activation of the auxiliary pick buttons 128. Actuation of the traction motor 110 may be accomplished by activating the pick buttons 108 after the coast control system 109 has first been activated.

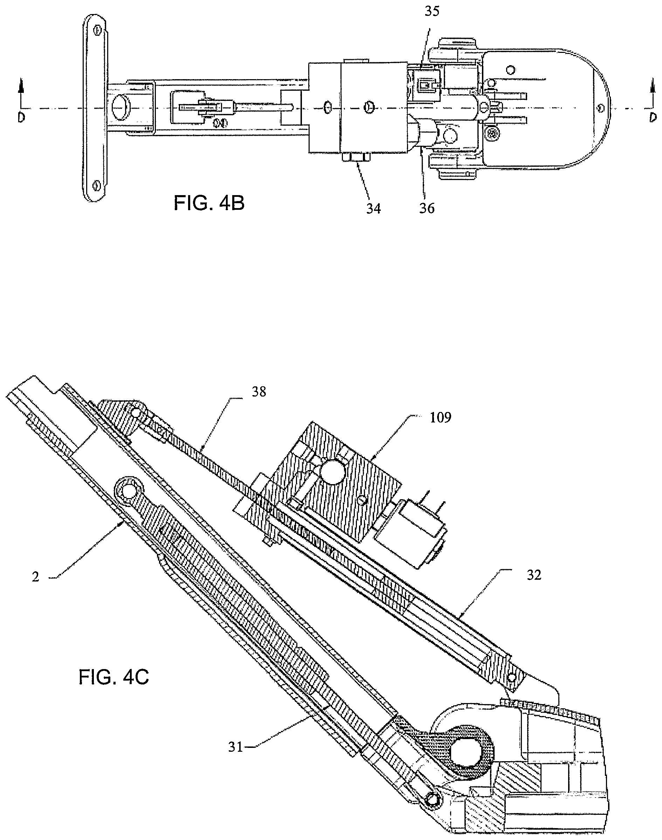

The control arm 2 and coast control system 109 are shown in Fig. 4A and Fig. 4B, as separated from the pallet truck 20 for clarity. Visible components of the coast control system include an actuation cylinder 32, a check valve 34, a solenoid valve 35, and a pressure switch 36. A cross-sectional view of the control arm 2 and coast control system 109 is shown in Fig. 4C, and is further identified as section D-D in Fig. 4B. Fig. 4C shows that a return spring 31 may be provided in the control arm. Actuation cylinder 32 may include an internal rod 38 that slides in and out of the cylinder 32 according to a vertical pivoting movement of the control arm 2. By holding the rod 38 substantially rigid with respect to the actuation cylinder 32, the control arm 2 may be locked in one of an infinite number of positions as determined by the operator. The rod 38 may be held rigid by applying a hydraulic, pneumatic, or mechanical force, for example, as further described below.

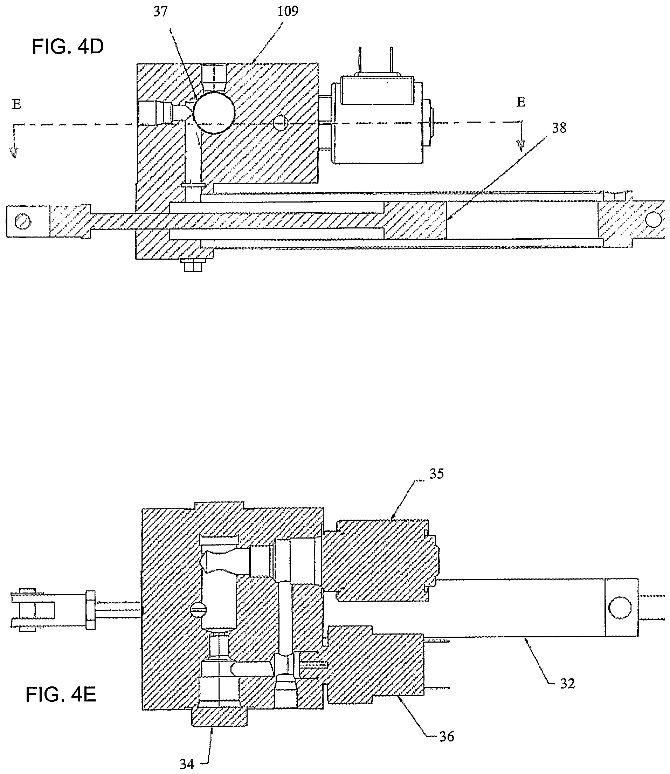

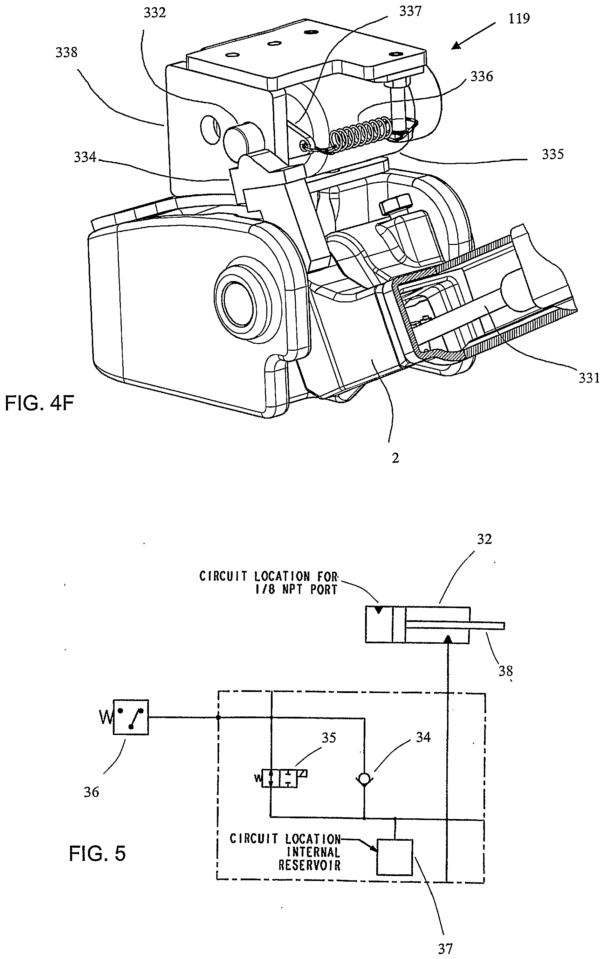

Fig. 4D provides an enlarged view of the coast control system 109 including the same cross section shown in Fig. 4C. In this view, the rod 38 and a hydraulic reservoir 37 can be clearly seen. Additionally, Fig. 4E provides a different cross-sectional view identified by section E-E, although it is understood that the section E-E is taken with respect to the entire coast control system 109, rather than the cross-sectional view shown by section D-D in Fig. 4D. Fig. 4E therefore provides a top view of the internal components of the coast control system 109. The interaction of these components is further illustrated with respect to the hydraulic schematic shown in Fig. 5.

Fig. 4F shows an alternate embodiment of a coast control system 119, which operates similarly as coast control system 109 other than for the mechanical features disclosed below. Coast control system 119 is comprised of a pneumatic control arm return spring 331, a control arm detent 332, a rubber control arm stop 334, an electric push solenoid 335, a solenoid return spring 336, a detent return plate 337, and a solenoid holding weldment 338. The dead-man brake mechanism functions when the operator ceases to hold the control arm 2 in a non vertical position. In this case, the return spring 331 applies a force to move the control arm 2 to a vertical, braking position, which in turn activates the vehicle brake switch 101. However, the return spring 331 force may be overcome by the operator holding the steer control handle 13 in a lowered position.

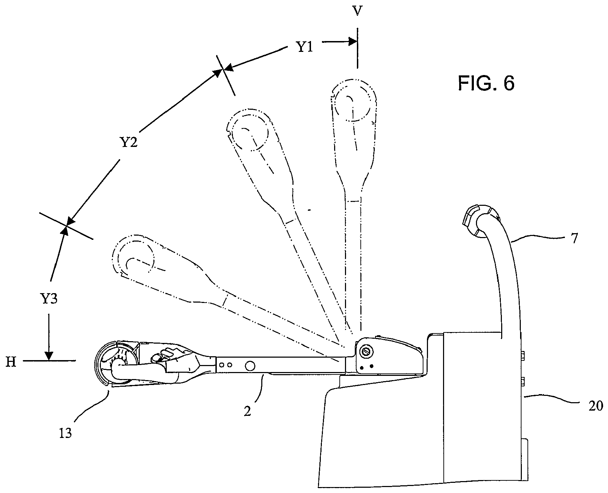

Activation of the pick button 108 causes the solenoid 335 to eject the detent 332 through a hole in the solenoid holding weldment 338 and into the path of the control arm stop 334. The friction between the control arm stop 334 and the detent 332 is enough to overcome the force applied by the control arm return spring 331, and instead maintain the control arm 2 in a non-vertical position. When the coast control system 119 is activated, the control arm 2 is locked in the position intermediate between pivot ranges Y1 and Y2 (Fig. 6). As a result, the control arm 2 remains in a non-braking position even if the operator releases both the pick button 108 and the steering handle 13, and the pallet truck 20 will be allowed to coast to a stop if no further operator intervention occurs.

The operator can overcome the friction force between the control arm stop 334 and the detent 332 by applying pressure to the steer control handle 13 in either an upward or downward motion, and move the control arm 2 to a braking position, thereby activating the vehicle brake switch 101 in order to apply a braking force to the pallet truck 20. A force of approximately 15 pounds applied at the steer control handle 13 causes the rubber control arm stop 334 to deform sufficiently for it to pass by the detent 332, and thereby disengage the coast control system 119.

The coast control systems 109 and 119 provide for retaining the control arm 2 in a fixed position between vertical and horizontal, however other locking mechanisms can be employed, such as a magnetic or friction device, which would hold the control arm 2 in any one of an infinite number of positions between vertical and horizontal.

When the control arm 2 is forced out of the fixed position held by the coast control system 109, the solenoid 35 stops applying a force to the detent 32, and instead the solenoid return spring 36 causes the detent 32 to retract through the solenoid holding weldment 38 and away from the control arm stop 34 by means of the movable detent return plate 37 which is attached directly to the detent 32.

With the pallet truck 20 in a powered-down state, return spring 31 causes the control arm 2 to remain in a vertical position, thereby activating a vehicle brake switch 101. The return spring 31 is shown as being connected internally to the control arm 2, however it could be attached externally. The return spring 31 retains the control arm 2 in the vertical position in the powered-down and powered-up states unless moved to a non-vertical position by the operator. In one embodiment, with the control arm 2 of the pallet truck 20 in a braking position, the low and high speed travel circuits may not be energized and therefore the traction motor 110 may not be actuated, even after the key switch 100 has been turned on and the pallet truck 20 has been powered-on. In another embodiment a dead-man brake override, or "creep speed" button, may be pressed which allows actuation of the traction motor 110 even when the control arm 2 is in a braking position. Actuation of the traction motor 110 according to the brake override button may be restricted to a reduced maximum travel speed of the pallet truck 20.

With the pallet truck 20 in a powered-on state, and the control arm 2 lowered to a non-braking position, the pallet truck 20 automatically enters the low speed travel mode. In this mode, the operator may operate the pallet truck 20 when riding on, when walking alongside, or walking behind, the pallet truck 20. If the operator releases the control arm 2, the return spring 31 causes the control arm 2 to return to a vertical position and activate the vehicle brake switch 101, thereby causing the pallet truck 20 to stop.

The dead-man brake mechanism functions when the operator ceases to hold the control arm 2 in a non vertical position. In this case, the return spring 31 normally applies a force to move the control arm 2 to a vertical, braking position, which in turn activates the vehicle brake switch 101. However, the return spring 31 force may be overcome by the operator holding the steer control handle 13 in a lowered position.

Fig. 6 shows how the control arm 2 can be pivoted about a vertical axis as well as a horizontal axis as shown in Fig.5, or may be pivoted about both axes simultaneously providing for a virtually infinite number of positions in an approximate quarter-sphere operating range. Fig. 6 shows five distinct ranges of vertical movement of the control arm 2, defined as V, Y1, Y2, Y3, and H, which determines the acceleration, deceleration, braking, and travel speed, for the pallet truck 20 for a given horizontal position of the control arm 2. The pallet truck 20 is caused to brake when the control arm 2 is in an approximate vertical position V and approximate horizontal position H. The term approximate as used in the preceding sentence, could be understood to provide a tolerance of 3 to 5 degrees from the vertical or horizontal position, for example.

When the coast control system 109 or 119 is activated, the control arm 2 is locked in the position intermediate between pivot ranges Y1 and Y3 shown in Fig. 6. As a result, the control arm 2 remains in a non-braking position if the operator releases both the pick button 108 and the steering handle 13, and the pallet truck 20 is allowed to coast to a stop if no further operator intervention occurs. The operator can overcome the force applied by the actuation cylinder 32 by applying pressure to the steer control handle 13 in either an upward or downward motion in order to move the control arm 2 to a braking position. With the control arm 2 in a braking position this activates the vehicle brake switch 101 which then causes a braking force to be applied to the pallet truck 20.

Fig. 7 provides an illustrative circuit of one embodiment. This circuit provides for various modes of travel, including low speed travel mode, high speed travel mode, coast control, and the pick state or walking state. With the pallet truck 20 in a powered-down state, all switches shown in Fig. 7, including 100, 101, 102, 103 and 104, are open, and the return spring 31 causes the control arm 2 to spring to a vertical position and activate the vehicle brake switch 101. When the pallet truck 20 is powered on, key switch 100 is closed, however the circuit is still not energized because the brake switch 101 remains open. When the vehicle brake switch 101 is activated it remains open. To close the brake switch 101, the operator moves the control arm 2 into a position between vertical and horizontal. Once both switches 100 and 101 are closed, the circuit is energized in a low speed travel mode. In the low speed travel mode, acceleration of the pallet truck 20 via a traction motor 110 may be accomplished by use of the variable throttle 107 which provides a limited predetermined rate of travel for the pallet truck 20 according to the regulation provided by the motor controller 105.

An embodiment is now described making reference to Figs. 5, 6 and 7. Activation of the pick button 108 causes the pick switch 103 to signal a motor controller 105 and thereby engage the coast control system 109. The solenoid valve 35 inhibits the flow of hydraulic fluid through the actuation cylinder 32, thereby building pressure and exerting a force on the control arm 2 in the user selected position. The pressure in the actuation cylinder 32 is enough to overcome the force applied by the control arm return spring 31, and instead maintain the control arm 2 in a user selected position.

By applying an upward force to the steer control arm 2 that is locked in a range Y2, a pressure within the actuation cylinder 32 increases until a predetermined pressure causes the pressure switch 36 to open and actuate the solenoid valve 35. The solenoid valve 35 releases the pressure from the actuation cylinder 32 and allows hydraulic fluid to flow back to the reservoir 37. This hydro-mechanically releases the coast control system 109 and allows the steer control arm 2 to be moved from range Y2 to the Y1 braking position according to the upward force. The brake switch 101 is opened when the steer control arm is in range Y1. The upward force may be applied either by the operator or by the return spring 31. The motor controller 105 is disabled when the brake switch 101 is opened.

When a downward force is applied to the steer control arm 2 that is locked in a range Y2, a pressure within the actuation cylinder 32 increases until a predetermined pressure causes the pressure switch 36 to open and actuate the solenoid valve 35. The solenoid valve 35 releases the pressure from the actuation cylinder 32 and allows hydraulic fluid to flow back to the reservoir 37. This hydro-mechanically releases the coast control system 109 and allows the steer control arm 2 to be moved from range Y2 to the Y3 braking position according to the downward force. The brake switch 101 is opened when the steer control arm is in range Y3, thereby disabling the motor controller 105. The downward force may be applied by the operator.

The coast control system 109 provides for retaining the control arm 2 in an operator selected position between vertical and horizontal. In an alternative embodiment, a mechanical or pneumatic force may be applied to the actuation cylinder 32 that would function to lock the control arm 2 in a user selected position. A pneumatic force could be directed into the actuation cylinder 32 that would lock the rod 38 in a rigid position. Alternatively, a mechanical force such as a gear or locking device could hold the rod 38 rigid with respect to the actuation cylinder 32. Other types of actuating cylinders having rods that are known in the art are claimed herein.

With the pallet truck 20 operating in the low speed travel mode, the operator is able to activate the pick state, or walking state, of the pallet truck 20 by activating a pick button 108. The pick button 108, or other type of switch, may be located anywhere on the truck, including the control arm handle 13, the operator platform 5, or on the support bar 7, for example. With the pick state activated by means of a pick button 108 located on the control arm handle 13, the coast control system 109 or 119 of the pallet truck is activated which causes the control arm 2 to remain in a non-braking position. This prevents the vehicle brake switch 101 from being activated, and the pallet truck 20 is allowed to coast to a stop after the traction motor 110 is de-actuated.

Activation of the pick button 108 causes the pallet truck 20 to move in the forward direction, towards the forks 10, up to the maximum allowable travel speed in the low speed travel mode. Activation of the pick button 108 also overrides the return spring 31. The pallet truck 20 continues being accelerated in the forward direction so long as the pick button 108 is being depressed, up to a maximum travel speed. When the operator releases the pick button 108, the pallet truck 20 coasts to a stop without the operator maintaining physical contact with the pallet truck 20 or control arm 2. The operator is able to walk alongside, or ahead of the pallet truck 20 to pick the next load. While the pallet truck 20 is in the pick state, the operator is able to repeatedly accelerate the pallet truck 20 within the low speed travel range by either reactivating the pick button 108, or by holding open the throttle 107.

The pallet truck 20 remains in the pick state until the vehicle brake switch 101 is activated, the high speed travel button 4 is activated, the battery 111 is disconnected, or the key switch 100 is turned off. The battery 111 may become disconnected from the electrical circuit by physical removal of connecting wiring or if the operator presses an emergency off button (not shown), and in either case the pallet truck 20 is no longer operating in the pick state. If the operator manually forces the control arm 2 into either a vertical or horizontal position, the vehicle brake switch 101 is activated, the traction motor 108 is de-actuated as the low and high speed travel circuits are open, and the pallet truck 20 is no longer operating in the pick state.

In one embodiment, activation of the throttle 107, pick button 108, and the high speed button 4 is not effective with the control arm 2 in a braking position. The braking position of the control arm 2 is specified by an approximate vertical position V and approximate horizontal position H as shown in Fig. 6. The term approximate as used in the preceding sentence, could be understood to provide a predetermined angle from the vertical or horizontal position. The throttle 107, pick button 108, and the high speed button 4 may all be normally applied when the control arm is located in range Y2. As the control arm 2 approaches the vertical and horizontal braking positions, and is in the ranges of motion shown as Y1 and Y3, the level of performance of the traction motor 110 may be maintained at a lower value so as to avoid abrupt changes in acceleration of the pallet truck 20. These systems recognize that when the control arm 2 is in a near vertical position that the operator is likely preparing to brake the pallet truck 20, and requires more sensitive control for steering and acceleration at these lower speeds. By causing a reduction in the overall rate of acceleration of the pallet truck 20, the operator is able to control the speed of the pallet truck 20 in finer increments while using the same throttle 107 as at normal travel speeds. Another embodiment includes a high speed button 4 that is only functional in the range Y2, or instead that would provide for an intermediate vehicle acceleration rate less than the maximum high speed travel rate and greater than the low speed travel rate.

With the control arm 2 located in a non-braking position, the operator can activate the pick state by pressing the pick button 108. Pressing the pick button 108 closes the pick switch 103, thereby activating the coast control system 109 or 119. This energizes the motor controller 105 and actuates the traction motor 110 in the low speed travel mode as limited to a predetermined rate of travel for the pallet truck 10 according to the low speed travel range. The pick state is de-actuated when the pick button 108 is released and therefore the pick switch 103 is opened. The pallet truck 20 remains in the pick state until one of the following conditions occurs: the vehicle brake switch 101 is activated, the high speed switch 102 is activated, the battery 111 is disconnected, or the key switch 100 is turned off.

With the pick switch 103 closed, and the coast control system 109 or 119 activated, the control arm 2 is held in an operator selected position between vertical and horizontal by the coast control system 109 or 119 which thereby overrides the return spring 31. Therefore, when the operator releases the pick button 108, the traction motor 110 is de-actuated, however the coast control system 109 or 119 continues to override the return spring 31 thus allowing the pallet truck 20 to coast to a stop even when the operator is no longer holding the control arm 2 in a non-braking position. This allows the operator to leave the moving pallet truck 20, and walk alongside or ahead of the pallet truck 20 in order to pick the next load. This is considered the pick state or walking state of the pallet truck 20 operation. Pick state allows for continuous activation of the coast control system 109 or 119 and actuation of the traction motor 110 in the low speed travel mode, either by pressing the pick button 108 or engaging the throttle 107.

The operator may activate the high speed travel mode by simultaneously or sequentially engaging the throttle 107 and pressing the high speed button 4, which closes the high speed switch 102. After the throttle 107 is engaged, the high speed switch 102 remains closed until the throttle 107 is placed in neutral, the battery 111 is disconnected, or the key switch 100 is turned off. When the high speed switch 102 is closed, the pick button 108 is disabled, and both the pick switch 103 and the traction switch 104 become open. This results in the deactivation of the coast control system 109 or 119 if the pallet truck 20 was in the pick state prior to activation of the high speed travel mode.

Disconnecting the battery 111, opening the key switch 100, or opening the brake switch 101, causes all other switches in the circuit to become open, preventing engagement of the traction motor 110 in any of the travel modes or operating states discussed.

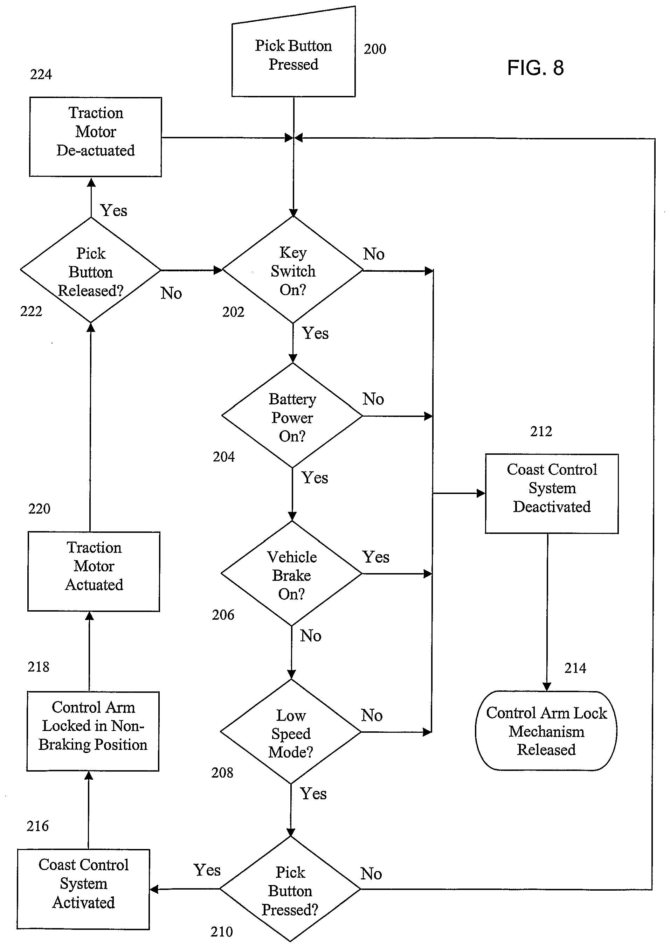

Fig. 8 shows an embodiment of a flow diagram of the pick state logic of the pallet truck 20, as monitored by the motor controller 105, which may be an on-board processor in one embodiment. When the operator presses the pick button 108 at step 200, the pallet truck's motor controller 105 evaluates the state of the electrical and mechanical operating systems. Pressing the pick button 108 has no effect if any of the following prior conditions exist: key switch 100 is turned off (step 202), battery power is disconnected (step 204), the control arm 2 is in a braking position (step 206), or the pallet truck 20 is in a non-low speed travel mode (208). If none of these conditions exist, then the coast control system 109 or 119 is activated (step 216) which causes the control arm 2 to become locked in a non-braking position (step 218), and the traction motor 110 to become engaged (step 220) while the pick button 108 is pressed (step 210). If the pick button 108 is released (step 222), the traction motor 110 de-actuates (step 224), and the motor controller 105 goes into a system check loop until the pick button 108 is again pressed (step 200), or any of the aforementioned conditions occur. If any of the aforementioned conditions occur, the coast control system 109 or 119 deactivates (step 212) and the truck exits the pick state. The control arm lock mechanism is released (step 214) and the control arm 2 moves to a substantially vertical position under power of the return spring 31 unless the operator applies force to retain the control arm 2 in a non-braking position.

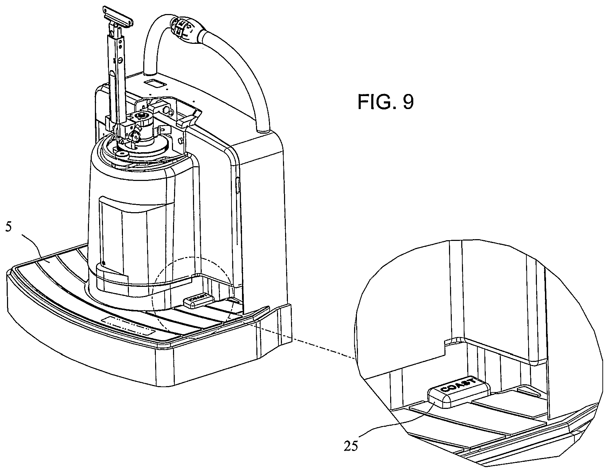

In another embodiment, a coast control enable button 25 shown in Fig. 9 is mounted to the operator platform 5. The operator first enables the coast control system by depressing the coast control enable button 25, and is then able to accelerate the pallet truck 20 in the pick state by means of the throttle 107 or pick button 108. In one embodiment, the coast control enable button 25 activates the coast control system 109 or 119 but does not actuate the traction motor when it is initially pressed. Pressing the coast control enable button 25 a second time could be set to either actuate the traction motor 110, or deactivate the coast control system 109 or 119.

Coast control enable button 25 can be made to simultaneously actuate the traction motor 110, and provide for subsequent actuation of the traction motor after the coast control system 109 or 119 has been activated. In this case, coast control enable button 25 would operate the same in all respects as the pick button108, other than its location, and as described previously. Alternatively, pressing the coast control enable button 25 could alternate between activating and deactivating the coast control system. If the coast control enable button 25 actuates the traction motor 110, then the traction motor 110 could be actuated upon the first instance of the coast control enable button 25 being pressed, and each successive time the coast control enable button 25 is pressed.

Fig. 9 shows an alternative embodiment providing for a coast control enable button 25 mounted to the operator platform 5 whereby the operator first enables the coast control system by depressing the coast control enable button 25, and is then able to accelerate the pallet truck 20 in the pick state by means of the throttle 107 or pick button 108. The coast control enable button 25 could serve to activate the coast control system 109 or 119 but not actuate the traction motor when it is initially pressed. Pressing the coast control enable button 25 a second time could be set to either actuate the traction motor 110, or deactivate the coast control system 109 or 119. Coast control enable button 25 can be made to simultaneously actuate the traction motor 110, and provide for subsequent actuation of the traction motor after the coast control system 109 or 119 has been activated. In this case, coast control enable button 25 would operate the same in all respects as the pick button108, other than its location, and as described in this patent. If the coast control enable button 25 does not actuate the traction motor 110 then pressing the coast control enable button 25 could alternate between activating and deactivating the coast control system. If the coast control enable button 25 actuates the traction motor 110, then the traction motor 110 could be actuated upon the first instance of the coast control enable button 25 being pressed, and each successive time the coast control enable button 25 is pressed.

The system herein described is furthermore compatible with a "creep speed" function whereby the operator is able to over-ride the braking condition of the pallet truck 20 with the control arm 2 in a vertical position, and cause the pallet truck 2 to move in reduced, or creep, speed. By overriding the braking condition with the control arm in a vertical, or near vertical position, the pallet truck 20 can be made to maneuver in a narrow turning radius or avoid getting stuck. In one embodiment, the creep speed would allow for a maximum vehicle travel speed that is less than the maximum travel speed allowed by the low speed travel mode previously described. One embodiment provides for the creep speed function to enable the pallet truck 20 to maneuver in small confines at a controlled low rate of travel, when the control arm 2 is located in an approximate vertical position V, or in the pivot range Y1 shown in Fig. 6. Other embodiments may continue to provide for creep speed functionality when the steer arm is within the pivot range Y2, for example.

In one embodiment, the creep speed function is disabled when the steer arm 2 is located in a horizontal position H or in the pivot range Y3, and instead the vehicle braking system would override the creep speed function and bring the pallet truck 20 to a controlled stop. Disabling the creep speed function in the pivot range Y3 would provide the operator an immediate means of braking the pallet truck 20. Furthermore, operation of the creep speed function with the steer arm 2 in the horizontal, or near horizontal position is not consistent with the goal of maneuvering the pallet truck 20 in a narrow confine at the reduced travel speed. With the steer arm 2 in the pivot range Y3, the turning radius of the pallet truck 20 is greatly increased as compared to the steer arm 2 being in a pivot range Y1. The operator who is carefully maneuvering the pallet truck 20 in a narrow confine, would want to reduce the turning radius in order to avoid hitting obstacles.

A creep speed button may be included in the vicinity of the steer control handle 13, which would engage a creep speed mode of the motor controller 105. The creep speed mode may be engaged upon a single press of the creep speed button, or alternatively be engaged only as long as the button is continually held in a pressed condition. Other types of switches, levers or controls may be used instead of the creep speed button, including being located on different parts of the steer arm 2 or on other locations of the pallet truck 20.

Variable acceleration, braking, travel speed, and steering control as defined by the position of the control arm 2 can be defined differently for high speed travel than for low speed travel. In another embodiment, high speed travel would only be possible with the control arm 2 in a center steering range between left and right, and the center range between vertical and horizontal braking conditions. In another embodiment, acceleration and travel speeds would be made to vary similar to the low speed travel modes when the control arm 2 lies in a range adjacent to the vertical or horizontal positions. Because of the inherent instability with the control arm 2 located in the extreme left and right steer positions, it may be desirable that the high speed button 4 is not functional in this condition, and that the pallet truck 20 would instead operate only under the conditions of the low speed travel mode.

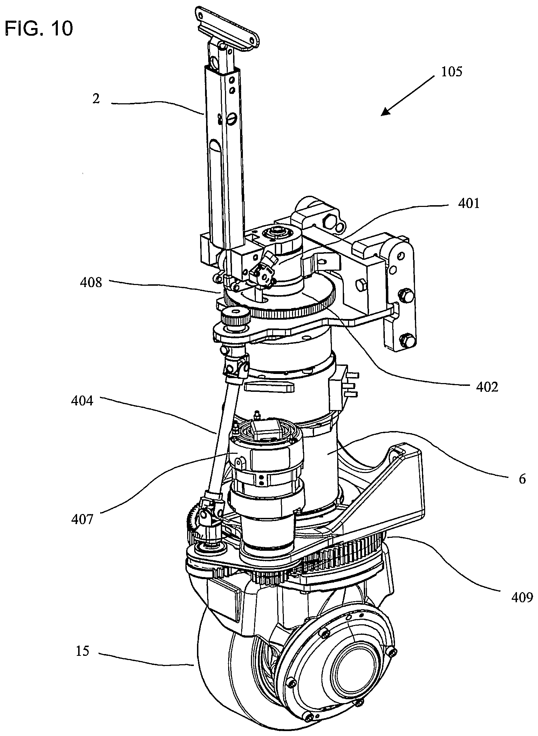

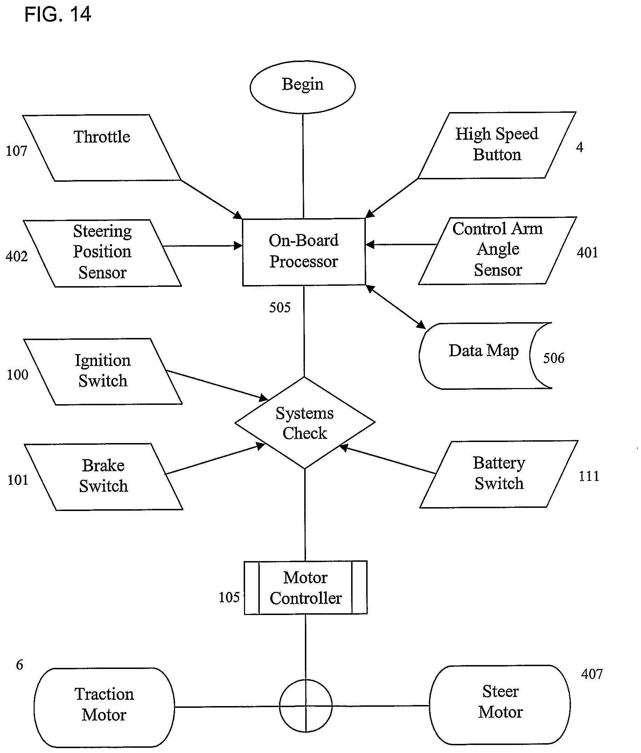

Fig. 10 shows the steer control unit 50 in greater detail, including the mechanical linkage and relative position of the control arm 2, control arm angle sensor 401, steering angle sensor 402, and the drive wheel 15. One embodiment provides for a control arm angle sensor 401 and a steering angle sensor 402, which determine the angle of control arm 2 both in the vertical (up and down) and horizontal (left and right) directions, respectively. An on-board processor 505 (Fig. 14) can be used to analyze the overall angle of the control arm 2 and determine the maximum allowable acceleration and travel speed, and then relay the information to the motor controller 105 to establish the acceptable acceleration, deceleration, braking and travel speed. The control arm angle data may be constantly monitored by the control arm angle sensor 401 and steering angle sensor 402 and the on-board processor 505, so that the acceleration and travel speed of the pallet truck 20 may be automatically adjusted as the operator moves the control arm 2 during normal operation of the pallet truck 20.

A minimum allowable acceleration and travel speed occurs with the control arm 2 located in the extreme left or extreme right steering position while at the same time being positioned in the near vertical or near horizontal non-braking position. The maximum allowable acceleration and travel speed occurs with the control arm 2 located approximately about the center position between left and right steering and at an approximate center position between vertical and horizontal position. Variable allowable acceleration and travel speeds occur when the control arm 2 is located in a position outside of the maximum and minimum acceleration positions described directly above. In one embodiment, the acceleration of the pallet truck 20 is set to zero if the control arm 2 is located in either the vertical or horizontal position.

The steering angle sensor 402 may also be used to determine the amount of force being applied by the operator to the steer control handle 13, and when this force exceeds a specified threshold value, a power assist system signals a steer motor 407 to provide additional torque to turn the drive wheel 15. The permissible torque provided by the steer motor 15 may be specified differently depending on the position of the control arm 2, and as determined by the on-board processor 505.

When the control arm angle sensor 401 and steering angle sensor 402 provide the on-board processor 505 with the position of the control arm 2, the on-board processor 505 is able to compute the allowable level of performance of the traction motor 6, as well as the permissible torque assistance provided by the power assist steering system. This may be accomplished by means of a mathematical calculation or algorithm, or according to predefined values found in mapped data. Moving the control arm 2 in either vertical or horizontal axis independently, or moving the control arm 2 in both axes concurrently, causes the allowable acceleration, deceleration, braking, travel speed, and steering control of the pallet truck 20 to vary according to the commands of the on-board processor 505.

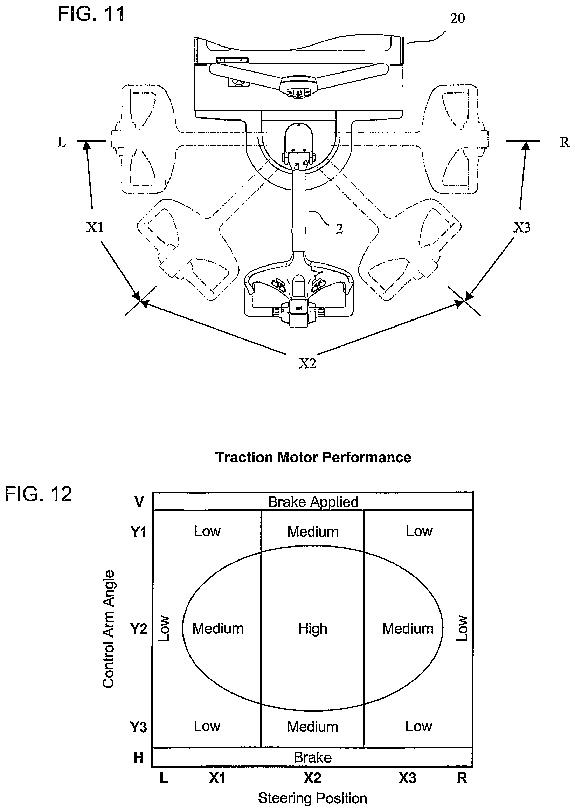

Fig. 11 shows five discrete ranges of horizontal movement of the control arm 2, defined as L, X1, X2, X3, and R, which determines the acceleration, deceleration, braking, and travel speed of the pallet truck 20 for a given vertical position of the control arm 2. Acceleration and travel speeds of the pallet truck 20 are greater when the control arm 2 is in range Y2 or X2, and is at the maximum rate when the position of the control arm 2 lies within ranges Y2 and X2 simultaneously.

Fig. 12 represents a graphical depiction for determining acceleration and travel speed as a function of the position of the control arm 2 about each axis. The horizontal movement of the control arm 2 is represented by the horizontal x-axis of the chart labeled
"Steering Position", and the vertical movement of the control arm 2 is represented by the vertical y-axis of the chart, labeled "Control Arm Angle". The on-board processor 505 compares the vertical and horizontal position of the control arm 2, and determines the allowable acceleration, deceleration, braking, and travel speed of the pallet truck 20 according to a predetermined data map 506, similar to that shown in Fig. 12. The "high" acceleration and travel speed, in this case, corresponds with the maximum allowable acceleration and travel speed of the low speed travel mode.

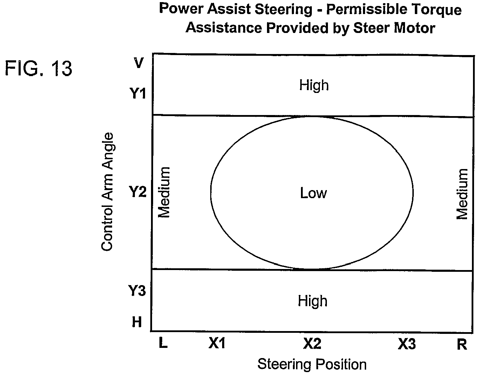

Fig. 12 represents a graphical depiction for determining the permissible torque assistance provided by the power assist steering system as a function of the position of the control arm 2 about each axis. The horizontal movement of the control arm 2 is represented by the horizontal x-axis of the chart labeled "Steering Position", and the vertical movement of the control arm 2 is represented by the vertical y-axis of the chart labeled "Control Arm Angle". The on-board processor 505 compares the vertical and horizontal position of the control arm 2, and determines the permissible torque assistance provided by the power assist steering system according to a predetermined data map 506, similar to that shown in Fig. 13. The "high" permissible torque assistance, in this case, corresponds with a maximum, or high, torque provided by the steer motor 407 when a threshold level of torque is applied to the steer handle 13. The "low" threshold value, in this case, corresponds with a minimum, or low, torque provided by the steer motor 407 when a threshold level of torque is applied to the steer handle 13. A "high" permissible torque assistance value, therefore, provides the operator with the greatest level of steering assistance.

The various combinations of steering position and control arm angle of the control arm 2 are now described in relation to the acceleration, deceleration, braking, and travel speed of the pallet truck 20, with reference to example travel modes as shown in Fig. 6, Fig. 11 and the data map shown in Fig. 12. With the control arm 2 located at the approximate center in both the horizontal (x axis) and vertical (y axis) positions, the data map 506 would specify a maximum allowable acceleration and travel speed of the pallet truck 20 within the current travel mode, low or high. As the control arm 2 is turned to the left or right, it next passes into steering positions X1 and X3 (Fig. 11). Within these steering positions, and provided the control arm 2 still lies in the control arm angle shown as Y2 (Fig. 6), the data map 506 would specify a "medium" or intermediate acceleration and travel speed. If the pallet truck 20 is in the high speed travel mode at the time the angle of the control arm 2 enters steering positions X1 or X3, the on-board processor 505 would disengage the high speed travel mode and cause the pallet truck 20 to enter the low speed travel mode.

As the control arm 2 approaches the approximate maximum left position L or approximate maximum right position R, the data map 506 would specify the "low" or minimum acceleration and travel speed. The pallet truck 20 would be restricted to this low acceleration and travel speed anytime the control arm 2 is located approximately at the L or R position, and regardless of the position of the control arm 2 in the vertical direction. The on-board processor 505 engages the low speed travel mode any time that the control arm 2 is located approximately at the L or R positions. Low, medium and high traction system performance can be set differently depending on the application, and in a typical pallet truck application could be set as 25%, 60% and 100% of available traction system performance, respectively.

With the control arm 2 in the Y1 or Y3 control arm angle (Fig. 6), the pallet truck 20 would be restricted to a low acceleration and travel speed when the control arm 2 is in the X1 or X3 (Fig. 11) steering positions, and would be restricted to an intermediate acceleration and travel speed when the control arm 2 is in the X2 steering position. Regardless of the steering position of the control arm 2, the on-board processor 505 would cause the pallet truck 20 to brake anytime the control arm angel of the control arm 2 was at the approximate positions of V or H. It should be understood that the system thus described is compatible with a "creep speed" function whereby the operator is able to over-ride the braking condition of the pallet truck 20 with the control arm 2 in a vertical position, and instead cause the pallet truck 2 to move in a low, or creep, speed. In another embodiment a creep speed function enables the pallet truck 20 to maneuver in small confines at a controlled low rate of travel, when the control arm 2 is located in an approximate vertical position.

The various combinations of steering angle and control arm angle of the control arm 2 are now described in relation to the permissible torque assistance provided by the power assist steering system, with reference to the example travel modes as shown in Fig. 6, Fig. 11 and the data map shown in Fig. 13. With the control arm 2 located at the approximate center in both the horizontal (x axis) and vertical (y axis) positions, the data map 506 would specify a low permissible torque assistance provided by the power assist steering system. As the control arm 2 is turned to the left or right, it next passes into steering positions X1 and X3 (Fig. 11), and ultimately to positions L and R. Within these approximate steering positions, and assuming the control arm 2 lies in the control arm angle Y2 (Fig. 6), the data map 506 would specify a low to medium permissible torque assistance provided by the power assist steering system,.

With the control arm 2 in the approximate control arm angles Y1 and Y3 or positions V and H, the permissible torque assistance provided by the power assist steering system, would be set at the high value regardless of the steering position of the control arm 2 in the horizontal axis. Torque assistance can be made a function of the pallet truck 20 travel speed, or low or high speed travel modes, which could result in a variable torque assistance. In one embodiment, activation of the steer motor 407 to provide power assisted steering would not be deactivated when the control arm 2 is approximately located in the control arm angles shown as V and H in Fig. 6.

Acceleration, deceleration, braking, travel speeds, and torque assistance can vary from low to medium to high, or other predetermined values and infinitely variable rates by the pallet truck manufacturer depending on customer application and requirements. The on-board processor 505 can set the acceleration, deceleration, braking, travel speeds, and torque assistance according to different vertical and horizontal positions of the control arm 2, and to multiple or infinitely variable ranges. Low, medium and high levels of power assisted steering can be set differently depending on the application, and in a typical pallet truck application could be set as 30%, 70% and 100% of available torque capacity, respectively.

Acceleration, deceleration, braking, travel speed, and torque assistance can be made to vary depending on the rate of change of position of the control arm 2. The control arm angle sensor 401 and the steering angle sensor 402 can be made to determine the angular rate of change in position of the control arm 2 in the vertical and horizontal directions, respectively. In one embodiment, the control arm 2 is moved in a rapid motion towards the approximate horizontal or approximate vertical positions. The acceleration, deceleration, braking, travel speed, and torque assistance commands that would otherwise be sent by the on-board processor 505 as a function of the position of the control arm 2 may be overridden such that the pallet truck is caused to decelerate, brake, or have a lower maximum allowable acceleration or travel speed. If the control arm 2 is maneuvered quickly to the extreme left or right positions, the on-board processor 505 could interpret this as the operator attempting to avoid an obstacle, in which case the on-board processor 505 may be programmed to send a braking command.

The on-board processor 505 seeks to anticipate the intention of the operator with respect to the operator commands, position of the control arm 2, and rate of change of position of the control arm 2. Rate of change of the control arm 2 can be evaluated by the on-board processor according to input from the control arm angle sensor 401 and steering angle sensor 402 individually or jointly. In addition, evaluation of the rate of change of position of the control arm 2 can be made a function of the pallet truck 20 travel speed, or low or high speed travel modes, which could result in variable acceleration, deceleration, braking, travel speed, and torque assistance commands being sent by the on-board processor 505.

Referring back to Fig. 10, as the control arm 2 is pivoted in either the horizontal or vertical axis, or a combination of both, the control arm angle sensor 401 and steering angle sensor 402 provide constant input to the on-board processor 505 (Fig. 14) which actively controls the performance of the traction motor 6 and steer motor 407 by means of a motor controller 105. There would typically be a different motor controller 105, for each of the traction motor 6 and the steer motor 407. As the control arm 2 is rotated in the horizontal axis, upper steering input gears 408 engage the mechanical connection 404 which causes the drive wheel 15 to rotate about a vertical axis. If the steering angle sensor 402 detects a threshold torque is being applied to the control arm 2, the on-board processor 505 sends a signal to the motor controller 105 to actuate the steer motor 407, which in turn assists in causing the rotation of the drive wheel 15 to about a vertical axis by means of the lower steering gears 409. The rotation of the drive wheel 15 about its vertical axis results in steering of the motorized pallet truck 20.

Disconnecting a battery 111 (Fig. 14), turning off an ignition 100 (Fig. 14), or activating a brake switch 101 (Fig. 14), disables the traction motor 6, in any of the travel modes or operating states discussed. In this case, position of the control arm 2 is ignored by the on-board processor 505 until such time that the traction motor 6 is again enabled, and the throttle 107 is activated.

The steer control handle 13 includes two symmetrical throttle 107 and two symmetrical pick buttons 108, as shown in Fig. 2. Operation of the throttle107 has been described above. Whereas the throttle 107 provides for variable acceleration and travel speeds within the predefined maximum allowable range, according to the position of the control arm 2 and according to the degree the throttle 107 is rotated, the pick button 108 acts to accelerate the traction motor 6 in a binary condition, either on or off. Operation of the pick button 108 may provide for a maximum acceleration and travel speed of the pallet truck 20 as determined by the angle of the control arm 2 in the vertical and horizontal position. Therefore, pressing the pick button 108 causes the pallet truck to accelerate at the maximum value according to the position of control arm 2 and the acceleration command provided by the on-board processor 505.

Acceleration, deceleration, braking, travel speeds and torque assistance may be set differently by the on-board processor 505 when the operator presses the high speed button 4, and causes the pallet truck 20 to enter a high speed travel mode. In another embodiment, the high speed button 4 may only be activated if the control arm 2 lies in a position within both ranges Y2 and X2, as shown in Fig. 6 and Fig. 11, simultaneously. If the control arm 2 lies outside of this area, than the high speed button 4 may not be activated. In yet another embodiment, a reduced intermediate acceleration and travel speed within the high speed travel range may be possible if the control arm 2 lies with range X2 and either of the ranges Y1 or Y3. This intermediate acceleration and travel speed within the high speed travel range would be higher than the maximum allowable acceleration and travel speed within the low speed travel range, for example. With the control arm 2 located in ranges X1 or X3, it may be desirable that acceleration and travel speeds does not exceed those defined for the low speed travel mode, and the high speed mode would be deactivated.

Fig. 14 shows a state diagram providing an overview of the traction and steer system functionality. The on-board processor 505 continuously monitors input from the throttle 107, high speed button 4, steering position sensor 402, and control arm angle sensor 401. Where a pick button 108 (Fig. 2) is included on the pallet truck, this is also monitored by the on-board processor 505, consistent with the input from the throttle 107. The input to the on-board processor 505 constitutes the operator command and serves as a request for performance from the traction system, steering system, and/or braking system. High speed button 4 provides a request for increased performance of the traction motor 6, depending on the position of the throttle 107. The control arm angle sensor 401 provides the vertical position of the control arm 2. The steering position sensor 402 provides the horizontal position of the control arm 2, and also the rate of change of position of the control arm 2. One or more steering position sensors 402 may be used to provide the position and rate of change of position of the control arm.

The on-board processor 505 evaluates the operator command and references a programmable data map 506 to determine any predetermined performance values for the traction motor 6 and steering motor 407. The on-board processor 505 continuously monitors the ignition switch 100, brake switch 101, and battery 111, independently from the operator command to determine if the operator command should be overridden or modified according to the state of the pallet truck 20. Assuming the ignition switch 100, brake switch 101, and battery 111 indicate full operation of the pallet truck 20, the on-board processor 20 sends a command to a motor controller 105 according to the predetermined performance values provided by the data map 506. The motor controller 105 then actuates the traction motor 6 and/or the steer motor 407 depending on the operator command. There is typically a separate motor controller 105 for each motor. When the ignition switch 100, brake switch 101, or battery 111 indicate that an ignition off, braking, or battery disconnect condition exists, the on-board processor 505 overrides the request for actuation of the traction motor 6. The existence of these intermediate conditions do not necessarily override a request for activation of the steer motor 407, except where there is no available power to actuate the steer motor 407.

Other components, methods, and systems of the pallet truck 20 that are not described in this patent are understood to operate in a similar manner to other conventional pallet trucks known in the existing art. The system and apparatus described above can use dedicated processor systems, micro controllers, programmable logic devices, or microprocessors that perform some or all of the operations. Some of the operations described above may be implemented in software and other operations may be implemented in hardware.

For the sake of convenience, the operations are described as various interconnected functional blocks or diagrams. This is not necessary, however, and there may be cases where these functional blocks or diagrams are equivalently aggregated into a single logic device, program or operation with unclear boundaries.

Having described and illustrated the principles of the invention in a preferred embodiment thereof, it should be apparent that the invention may be modified in arrangement and detail without departing from such principles. I claim all modifications and variation coming within the spirit and scope of the following claims.

### PREFERRED EMBODIMENTS

1. A method for controlling a motorized vehicle, comprising:
   controlling acceleration, deceleration, braking, and travel speed of the motorized vehicle according to a vertical and horizontal position of a steering control.
2. The method according to clause 1 including providing a sensor or sensors which determine the angle of the steering control.
3. The method according to clause 1 including providing an on-board processor which determines a level of performance of the traction system based on the position of the steering control.
4. The method according to clause 3 including using a data map to provide the on-board processor with predetermined values based on the position of the steering control.
5. The method according to clause 1 including having predefined discrete ranges of motion in vertical and horizontal axes of rotation.
6. The method according to clause 5 including three or more predefined discrete ranges of motion in each of the vertical and horizontal axes of rotation.
7. The method according to clause 5 including determining traction system performance based on where the steering control is located within the predefined discrete ranges of motion.
8. The method according to clause 1 wherein the traction system performance varies depending if the motorized vehicle is traveling in a low speed mode or a high speed mode.
9. The method according to clause 1 wherein the operator command determines a rate of change of position of a steering control, and setting the traction system performance as a function of the rate of change of position of the steering control.
10. The method according to clause 9 including providing an on-board processor which uses an algorithm or equation to calculate the allowable setting for the traction system performance based on the position of the steering control and the rate of change of position of the steering control.
11. The method according to clause 9 including using a data map which provides an on-board processor with predetermined settings for the traction system performance based on discrete positions of the steering control and the rate of change of position of the steering control.
12. The method according to clause 9 including setting the traction system performance as a function of the rate of travel of the pallet truck.
13. A method for controlling the permissible torque assistance provided by a power assist steering system, comprising:
   setting a level of performance of the power assist steering system according to an angle of a steering control in a vertical axis and a horizontal axis of rotation.
14. The method according to clause 13 including having predefined discrete ranges of motion in the vertical and horizontal axes of rotation.
15. The method according to clause 14 including determining power assist steering system performance based on where the steering control is located within the predefined discrete ranges of motion.
16. The method according to clause 13 wherein the power assist steering system performance varies depending if the motorized vehicle is traveling in a low speed mode or a high speed mode.
17. The method according to clause 13 wherein the power assist steering system provides torque assistance if an operator provided steering torque is greater than a threshold torque value.
18. A system for controlling a pallet truck, comprising:
   a traction motor for driving the pallet truck; a control arm for steering a drive wheel that controls a direction of travel of the pallet truck;
   a steer motor for providing torque for steering the drive wheel; and
   a processor controlling the traction motor and the steer motor according to a monitored movement and position of the control arm in conjunction with a monitored amount of torque applied to the control arm.
19. The system according to clause 18 wherein the processor controls the traction motor and the steer motor according to both a monitored vertical and horizontal movement and position of the control arm.
20. The system according to clause 19 wherein the processor varies the amount of torque applied by the steer motor to assist in steering the steer wheel according to the monitored vertical and horizontal movement and position of the steer arm in conjunction with the amount of torque used by an operator to move the steer arm into the different vertical and horizontal positions.

## Claims

1. A method for controlling a power assist steering system, comprising:
measuring a position of a steering control (2) according to a rotation of the steer control arm (2) about one or both of a vertical axis of rotation and a horizontal axis of rotation; and
detecting a steer effort applied to the steer control arm (2);
**characterized in that** the method further comprises:
setting a level of power assistance provided by a steering motor (407), wherein the level of power assistance varies as a function of the position of the steer control arm (2); and
actuating the steering motor (407) in response to detecting that the steer effort indicates an operator provided steering torque greater than a threshold torque value.

2. The method according to claim 1, wherein the position of the steer control arm (2) is measured in a generally horizontal direction about the vertical axis of rotation, wherein the steering motor (407) is set to a higher level of power assistance as the steer control arm (2) approaches a maximum steering position.

3. The method according to claim 1, wherein the position of the steer control arm (2) is measured in a generally vertical position about the horizontal axis of rotation, wherein the steering motor (407) is set to a higher level of permissible power assistance torque as the steer control arm (2) approaches a braking position, wherein the braking position is identified by a substantially vertical position of the steer control arm (2).

4. The method according to claim 1, including dividing a rotational path of the steering control (2) into predefined discrete ranges of generally horizontal motion about the vertical axis of rotation, wherein the level of power assistance is set according to where the steer control arm (2) is located within these predefined discrete ranges of motion.

5. The method according to claim 1, wherein the level of power assistance of the steering motor (407) varies depending if the motorized vehicle is travelling in a low speed mode or a high speed mode for the same steer effort applied to the steer control arm (2).

6. The method according to claim 1, wherein the level of power assistance additionally varies as a function of an amount of torque applied to the steer control arm (2) from the steer effort.

7. The method according to claim 1, wherein the level of power assistance varies according to a rate of change of the position of the steer control arm (2) about the vertical axis of rotation.

8. A system for controlling a pallet truck, comprising:
a steer control arm (2) for steering a drive wheel that controls a direction of travel of the pallet truck; and
a steer motor for providing torque for steering the drive wheel;
**characterized in that** the system further comprises:
a processor configured to:
measure a position of the steer control arm (2) according to a rotation of the steer control arm (2) about one or both of a vertical axis of rotation and a horizontal axis of rotation; detect a steer effort applied to the steer control arm (2);
set a level of power assistance provided by a steering motor (407), wherein the level of power assistance varies as a function of the position of the steer control arm (2); and
actuate the steering motor (407) in response to detecting that the steer effort indicates an operator provided steering torque greater than a threshold torque value.

9. The system according to claim 8, wherein the position of the steer control arm (2) is measured in a generally horizontal direction about the vertical axis of rotation, wherein the steering motor (407) is set to a higher level of power assistance as the steer control arm (2) approaches a maximum steering position.

10. The system according to claim 8, wherein the position of the steer control arm (2) is measured in a generally vertical position about the horizontal axis of rotation, wherein the steering motor (407) is set to a higher level of power assistance as the steer control arm (2) approaches a braking position, wherein the braking position is identified by a substantially vertical position of the steer control arm (2).

11. The system according to claim 8, including dividing a rotational path of the steering control (2) into predefined discrete ranges of generally horizontal motion about the vertical axis of rotation, wherein the level of power assistance is set according to where the steer control arm (2) is located within these predefined discrete ranges of motion.

12. The system according to claim 8, wherein the level of power assistance of the steering motor (407) varies depending if the motorized vehicle is travelling in a low speed mode or a high speed mode for the same steer effort applied to the steer control arm (2).

13. The system according to claim 8, wherein the level of power assistance varies according to a rate of change of the position of the steer control arm (2) about the vertical axis of rotation.

14. The system according to claim 8, wherein the level of power assistance additionally varies as a function of an amount of torque applied to the steer control arm (2) from the steer effort.

## Patentansprüche

1. Verfahren zur Steuerung eines Servolenkungssystems, umfassend:
Messen einer Position einer Lenksteuerung (2) gemäß einer Drehung des Lenksteuerarms (2) um eine oder beide einer vertikalen Drehachse und einer horizontalen Drehachse; und
Erfassen eines auf den Lenksteuerarm (2) angewandten Lenkversuchs;
**dadurch gekennzeichnet, dass** das Verfahren ferner Folgendes umfasst:
Einstellen einer Stufe der von einem Lenkmotor (407) bereitgestellten Servounterstützung, wobei die Stufe der Servounterstützung als eine Funktion der Position des Lenksteuerarms (2) variiert; und
Betätigen des Lenkmotors (407) in Reaktion auf die Erfassung, dass der Lenkversuch ein größeres von einem Benutzer angewandtes Lenkmoment anzeigt als ein Schwellenwert-Drehmomentwert.

2. Verfahren nach Anspruch 1, wobei die Position des Lenksteuerarms (2) in eine im Allgemeinen horizontale Richtung um die vertikale Drehachse gemessen wird, wobei der Lenkmotor (407) auf eine höhere Stufe der Servounterstützung eingestellt wird, während sich der Lenksteuerarm (2) einer maximalen Lenkposition nähert.

3. Verfahren nach Anspruch 1, wobei die Position des Lenksteuerarms (2) in eine im Allgemeinen vertikale Position um die horizontale Drehachse gemessen wird, wobei der Lenkmotor (407) auf eine höhere Stufe des zulässigen Servounterstützungsmoments eingestellt wird, während sich der Lenksteuerarm (2) einer Bremsposition nähert, wobei die Bremsposition durch eine im Wesentlichen vertikale Position des Lenksteuerarms (2) gekennzeichnet wird.

4. Verfahren nach Anspruch 1, umfassend das Aufteilen eines Drehwegs der Lenksteuerung (2) in vordefinierte separate Bereiche von im Wesentlicher horizontaler Bewegung um die vertikale Drehachse, wobei die Stufe der Servounterstützung gemäß dessen eingestellt wird, wo sich der Lenksteuerarm (2) innerhalb dieser vordefinierten separaten Bewegungsbereiche befindet.

5. Verfahren nach Anspruch 1, wobei die Stufe der Servounterstützung des Lenkmotors (407) abhängig davon variiert, ob sich das motorisierte Fahrzeug in einem niedrigen Geschwindigkeitsmodus oder einem hohen Geschwindigkeitsmodus bei demselben auf den Lenksteuerarm (2) angewandten Lenkversuch fortbewegt.

6. Verfahren nach Anspruch 1, wobei die Stufe der Servounterstützung zusätzlich als eine Funktion einer auf den Lenksteuerarm (2) durch den Lenkversuch angewandten Menge des Drehmoments variiert.

7. Verfahren nach Anspruch 1, wobei die Stufe der Servounterstützung gemäß einer Veränderungsrate der Position des Lenksteuerarms (2) um die vertikale Drehachse variiert.

8. System zum Steuern eines Gabelhubwagens, umfassend:
einen Lenksteuerarm (2) zum Steuern eines Antriebsrads, das eine Fahrtrichtung des Gabelhubwagens steuert; und
einen Lenkmotor zum Bereitstellen von Drehmoment zum Lenken des Antriebsrads;
**dadurch gekennzeichnet, dass** das System ferner Folgendes umfasst:
einen Prozessor, der zu Folgendem konfiguriert ist:
Messen eine Position des Lenksteuerarms (2) gemäß einer Drehung des Lenksteuerarms (2) um eine oder beide einer vertikalen Drehachse und einer horizontalen Drehachse;
Erfassen eines auf den Lenksteuerarm (2) angewandten Lenkversuchs;
Einstellen einer Stufe der Servounterstützung, bereitgestellt von einem Lenkmotor (407), wobei die Stufe der Servounterstützung als eine Funktion der Position des Lenksteuerarms (2) variiert; und
Betätigen des Lenkmotors (407) in Reaktion auf die Erfassung, dass der Lenkversuch ein größeres von einem Benutzer angewandtes Lenkmoment anzeigt als ein Schwellenwert-Drehmomentwert.

9. System nach Anspruch 8, wobei die Position des Lenksteuerarms (2) in eine im Wesentlichen horizontale Richtung um die vertikale Drehachse gemessen wird, wobei der Lenkmotor (407) auf eine höhere Stufe der Servounterstützung eingestellt wird, während sich der Lenksteuerarm (2) einer maximalen Lenkposition nähert.

10. System nach Anspruch 8, wobei die Position des Lenksteuerarms (2) in einer im Wesentlichen vertikalen Position um die horizontale Drehachse gemessen wird, wobei der Lenkmotor (407) auf eine höhere Stufe der Servounterstützung eingestellt wird, während sich der Lenksteuerarm (2) einer Bremsposition nähert, wobei die Bremsposition durch eine im Wesentlichen vertikale Position des Lenksteuerarms (2) gekennzeichnet wird.

11. System nach Anspruch 8, umfassend das Aufteilen eines Drehwegs der Lenksteuerung (2) in vordefinierte separate Bereiche von im Allgemeinen horizontaler Bewegung um die vertikale Drehachse, wobei die Stufe der Servounterstützung gemäß dessen eingestellt wird, wo sich der Lenksteuerarm (2) innerhalb dieser vordefinierten separaten Bereiche der Bewegung befindet.

12. System nach Anspruch 8, wobei die Stufe der Servounterstützung des Lenkmotors (407) abhängig davon variiert, ob sich das motorisierte Fahrzeug in einem niedrigen Geschwindigkeitsmodus oder einem hohen Geschwindigkeitsmodus bei demselben auf den Lenksteuerarm (2) angewandten Lenkversuch fortbewegt.

13. System nach Anspruch 8, wobei die Stufe der Servounterstützung gemäß einer Veränderungsrate der Position des Lenksteuerarms (2) um die vertikale Drehachse variiert.

14. System nach Anspruch 8, wobei die Stufe der Servounterstützung zusätzlich als eine Funktion einer auf den Lenksteuerarm (2) durch den Lenkversuch angewandten Menge des Drehmoments variiert.

## Revendications

1. Procédé de commande d'un système électrique de direction assistée, comprenant :
la mesure d'une position d'une commande de direction (2) selon une rotation du levier de commande de braquage (2) autour d'un axe vertical de rotation et/ou d'un axe horizontal de rotation ; et
la détection d'un effort de braquage appliqué au levier de commande de braquage (2) ;
**caractérisé en ce que** le procédé comprend en outre :
la fixation d'un niveau d'assistance électrique fournie par un moteur de direction (407), le niveau d'assistance électrique variant en fonction de la position du levier de commande de braquage (2) ; et
l'actionnement du moteur de direction (407) en réponse à la détection que l'effort de braquage indique un couple de direction muni d'un opérateur supérieur à une valeur seuil de couple.

2. Procédé selon la revendication 1, dans lequel la position du levier de commande de braquage (2) est mesurée dans une direction généralement horizontale autour de l'axe vertical de rotation, le moteur de direction (407) étant établi à un niveau supérieur d'assistance électrique tandis que le levier de commande de braquage (2) s'approche d'une position de direction maximale.

3. Procédé selon la revendication 1, dans lequel la position du levier de commande de braquage (2) est mesurée dans une position généralement verticale autour de l'axe horizontal de rotation, le moteur de direction (407) étant établi à un niveau supérieur de couple d'assistance électrique admissible tandis que le levier de commande de braquage (2) s'approche d'une position de freinage, la position de freinage étant identifiée par une position sensiblement verticale du levier de commande de braquage (2).

4. Procédé selon la revendication 1, comprenant la division d'un trajet de rotation de la commande de direction (2) en gammes discrètes prédéfinies de déplacement généralement horizontal autour de l'axe vertical de rotation, le niveau d'assistance électrique étant défini selon l'endroit où le levier de commande de braquage (2) est situé dans ces gammes discrètes prédéfinies de déplacement.

5. Procédé selon la revendication 1, dans lequel le niveau d'assistance électrique du moteur de direction (407) varie selon si le véhicule motorisé se déplace dans un mode vitesse lente ou un mode grande vitesse pour le même effort de braquage appliqué au levier de commande de braquage (2).

6. Procédé selon la revendication 1, dans lequel le niveau d'assistance électrique varie en outre en fonction d'une quantité de couple appliqué au levier de commande de braquage (2) à partir de l'effort de braquage.

7. Procédé selon la revendication 1, dans lequel le niveau d'assistance électrique varie selon une vitesse de changement de la position du levier de commande de braquage (2) autour de l'axe vertical de rotation.

8. Système de commande d'un chariot à palette, comprenant :
un levier de commande de braquage (2) destiné à diriger une roue d'entraînement qui commande une direction de déplacement du chariot à palette ; et
un moteur de direction destiné à fournir un couple en vue de diriger la roue d'entraînement ;
**caractérisé en ce que** le système comprend en outre :
un processeur conçu pour :
mesurer une position du levier de commande de braquage (2) selon une rotation du levier de commande de braquage (2) autour d'un axe vertical de rotation et/ou d'un axe horizontal de rotation ;
détecter un effort de braquage appliqué au levier de commande de braquage (2) ;
établir un niveau d'assistance électrique fournie par un moteur de direction (407), le niveau d'assistance électrique variant en fonction de la position du levier de commande de braquage (2) ; et
actionner le moteur de direction (407) en réponse à la détection que l'effort de braquage indique un couple de direction muni d'un opérateur supérieur à une valeur seuil de couple.

9. Système selon la revendication 8, dans lequel la position du levier de commande de braquage (2) est mesurée dans une direction généralement horizontale autour de l'axe vertical de rotation, le moteur de direction (407) étant établi à un niveau supérieur d'assistance électrique tandis que le levier de commande de braquage (2) s'approche d'une position de direction maximale.

10. Système selon la revendication 8, dans lequel la position du levier de commande de braquage (2) est mesurée dans une position généralement verticale autour de l'axe horizontal de rotation, le moteur de direction (407) étant établi à un niveau supérieur d'assistance électrique tandis que le levier de commande de braquage (2) s'approche d'une position de freinage, la position de freinage étant identifiée par une position sensiblement verticale du levier de commande de braquage (2).

11. Système selon la revendication 8, comprenant la division d'un trajet de rotation de la commande de direction (2) en gammes discrètes prédéfinies de déplacement généralement horizontal autour de l'axe vertical de rotation, le niveau d'assistance électrique étant établi en fonction de l'endroit où le levier de commande de braquage (2) est situé à l'intérieur de ces gammes discrètes prédéfinies de déplacement.

12. Système selon la revendication 8, dans lequel le niveau d'assistance électrique du moteur de direction (407) varie selon si le véhicule motorisé se déplace dans un mode vitesse lente ou un mode grande vitesse pour le même effort de braquage appliqué au levier de commande de braquage (2).

13. Système selon la revendication 8, dans lequel le niveau d'assistance électrique varie en fonction d'une vitesse de changement de la position du bras de commande de braquage (2) autour de l'axe vertical de rotation.

14. Système selon la revendication 8, dans lequel le niveau d'assistance électrique varie en outre en fonction d'une quantité de couple appliqué au levier de commande de braquage (2) à partir de l'effort de braquage.
